# EUROPEAN PATENT SPECIFICATION

(11) **EP 0 425 021 B1**
(45) Date of publication and mention of the grant of the patent: **06.10.1993**
(21) Application number: 90202764.8
(22) Date of filing: 17.10.1990
(51) Int. Cl.: B65G 23/23, B65G 17/34

(54) **Conveyor**
Fördervorrichtung
Transporteur

(30) Priority: 19.10.1989 NL 8902586
(43) Date of publication of application: 02.05.1991
(73) Proprietor: VANDERLANDE INDUSTRIES NEDERLAND B.V., NL-5466 RB Veghel (NL)
(72) Inventor: Van den Goor, Jakobus Marie, NL-5674 SH Nuenen (NL)
(74) Representative: Vollebregt, Cornelis Jacobus, Ir.

(56) References cited:
- DE-A- 2 310 353
- FR-A- 2 096 810
- US-A- 3 788 447

## Description

The invention relates to a conveyor provided with a frame and with an endless conveying means supported by said frame, said endless conveying means being provided with a plurality of pivotally coupled trolleys, each provided with an endless conveyor belt to be used for supporting the objects to be conveyed during operation whereby an endless conveyor belt can be driven in a direction transverse to the longitudinal direction of the conveying means by means of at least one linear motor taking a fixed position with respect to the frame, which motor co-operates with at least one reaction means, which is coupled to a corresponding trolley, for driving the endless conveyor belt.

From FR-A-2096810 there is known such a conveyor wherein the conveyor belts have been made from a metal material or support a metal material.

According the invention the reaction means is formed by a roller and the conveyor belt is in contact with said roller over part of the circumference of said roller.

The invention will be further explained hereinafter with reference to an embodiment of the construction according to the invention diagrammatically illustrated in the accompanying Figures.

Figure 1 is a diagrammatic perspective view of a part of an embodiment of a conveyor.

Figure 2 is a diagrammatic cross-section of a second embodiment of a conveyor.

Figure 3 is a diagrammatic perspective view of an embodiment of a conveyor according to the invention.

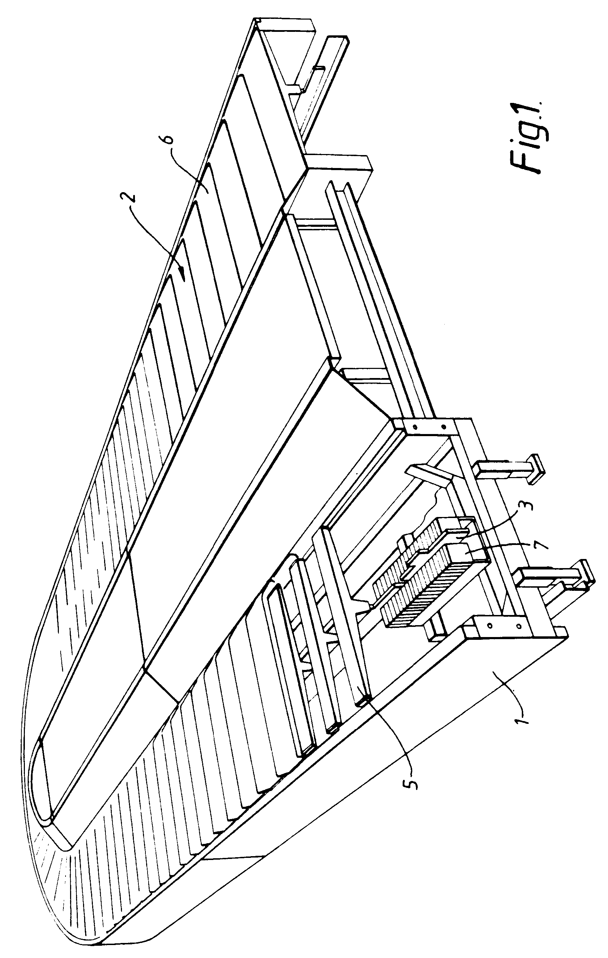

Figure 1 diagrammatically shows a perspective view of a conveyor of the type which is widely used at airports for conveying luggage.

Said conveyor is provided with a frame 1 and an endless conveying means 2. Said endless conveying means 2 comprises guide plates 3, which are coupled to trolleys or carriers 5 which are guided along a rail track and which are mutually connected, e.g. by means of vertically extending pivot pins, to which carriers 5 there are fixed overlapping, like roof tiles, load-bearing elements 6. The objects to be conveyed, such as suitcases and the like, will be placed on the load-bearing elements 6 when the conveyor is being used, and be moved in an endless path by the endless conveying means.

As is shown in Figure 1 use can be made of linear motors 7 for driving the conveyor, said linear motors 7 being fixed to the frame and being disposed, spaced from each other, in the longitudinal direction of the endless conveying means. The linear motors will thereby co-operate with the plates 3 functioning as reaction means, said plates e.g. being made of aluminium. It will be seen that the construction will thereby be such that when the linear motors 7 are driven the plate-shaped reaction means 3 and the carriers 5 coupled thereto will be moved in the longitudinal direction of the endless conveying means 2, thus moving the endless conveying means.

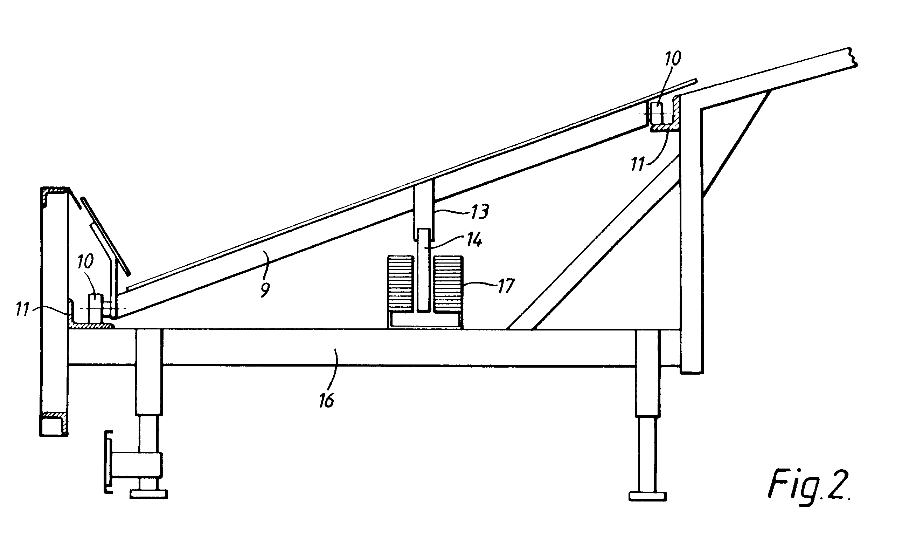

Figure 2 shows a section of a conveyor which, like the conveyor shown in Figure 1, is provided with a plurality of carriers or trolleys 9, which are guided along rails 11 by means of rollers 10. Said trolleys are mutually connected by means of vertically extending pivot pins, so as to form an endless train. At their bottom sides the trolleys are thereby provided with sleeves 13. To the sleeves 13 there are fixed, in a similar manner as in the preceding embodiment, reaction means formed by aluminium plates 14.

The endless conveying means thus formed by the parts 9 - 11, 13, 14 is supported by a frame 16.

Also in this case one or more linear motors 17 are fixed to the frame for driving the conveying means, in such a manner that when said motor(s) 17 is (are) driven the reaction means 14 will be moved in the longitudinal direction of the conveying means, in order to drive the conveying means in this manner.

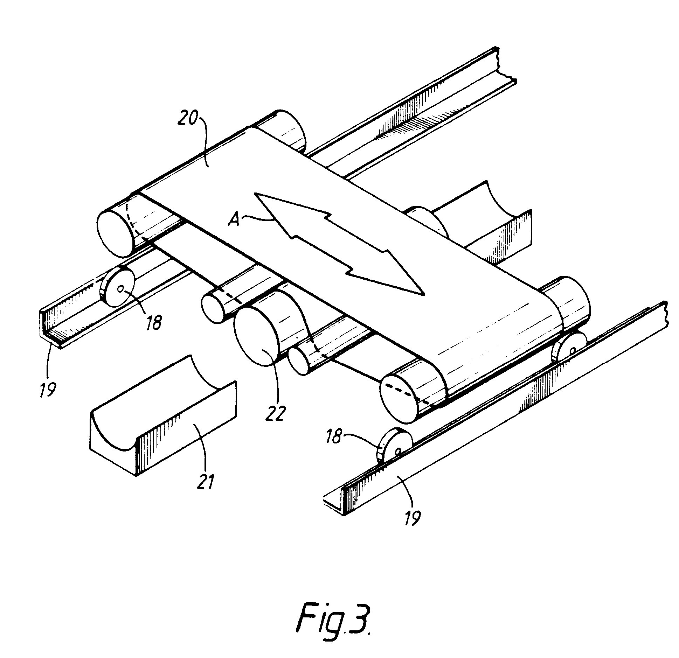

Figure 3 diagrammatically shows a section of a conveyor of the type such as e.g. described in the prior Dutch Patent Applications Nos. 8900974 and 8900975. With such a conveyor the conveying means is comprised of a plurality of trolleys which are mutually coupled so as to form an endless train. Each trolley is thereby provided with a frame part, which is supported by running wheels 18 on rails 19 extending in the longitudinal direction of the conveying means formed by said trolleys. Each trolley is thereby provided with an endless conveyor belt 20 or the like means of conveyance, as is also described in the abovementioned prior Applications Nos. 8900974 and 8900975, by means of which an object moved in the one or the other direction by means of the endless conveying means is movable transversely to the longitudinal direction of said conveying means, as is indicated by means of the arrow A.

As is further described in the above-mentioned Dutch Patent Applications Nos. 8900974 and 8900975 each trolley is provided with a driving motor for the means of conveyance 20 in the known constructions, which driving motor must somehow be powered.

With the construction according to the invention a linear motor 21 for driving the means of conveyance 20 is disposed in those places where possibly an object supported by the means of conveyance 20 in question is to be discharged from the endless conveying means. A reaction means 22, in the shape of an aluminium roller, is provided in the illustrated embodiment for this purpose, said reaction means being journalled in the frame part supported by the wheels 18, which frame part also supports the means of conveyance 20. The roller 22 is thereby arranged in the manner illustrated in Figure 3, such that the endless conveying means 20 extends along part of the circumference of the roller 22. It will be seen that when a roller 22 is located near a linear motor 21, and said motor is driven, the roller 22 will be set rotating, thus driving the endless conveying means 20 in order to discharge an object present on the endless conveyor belt 20. When using such a construction it is not necessary, therefore, to provide each trolley supporting a means of conveyance 20 with its own driving source, but only a certain number of fixedly disposed linear motors 21 need to be provided near the intended locations of discharge, whereby said linear motors 21 can be driven in a simple manner, without having to use sliding contacts or the like. It will be seen that thus a considerable simplification of the driving mechanism for driving the various conveyor belts 20 of the endless conveying means can be realised.

## Claims

1. Conveyor provided with a frame and with an endless conveying means supported by said frame, said endless conveying means being provided with a plurality of pivotally coupled trolleys (18) each provided with an endless conveyor belt (20) to be used for supporting the objects to be conveyed during operation, whereby an endless conveyor belt (20) can be driven in a direction transverse to the longitudinal direction of the conveying means by means of linear motor (21) taking a fixed position with respect to the frame (19), which motor (21) co-operates with at least one reaction means (22), which is coupled to a corresponding trolley (18) for driving the endless conveyor belt (20), characterized in that the reaction means (22) is formed by a roller and the conveyor belt (20) is in contact with said roller over part of the circumference of said roller.

## Patentansprüche

1. Förderer, der mit einem Rahmen und mit einer vom Rahmen gelagerten Endlosfördereinrichtung versehen ist, wobei die Endlosfördereinrichtung eine Vielzahl von schwenkbar gekuppelten Wagen (18) aufweist, die jeweils mit einem Endlosförderband (20) versehen sind, das zur Lagerung der während des Betriebes zu fördernden Gegenstände dient, und wobei ein Endlosförderband (20) in einer Richtung quer zur Längsrichtung der Fördereinrichtung durch einen Linearmotor (21) angetrieben werden kann, der eine feste Position relativ zum Rahmen (19) einnimmt und mit mindestens einer Reaktionseinrichtung (22) zusammenwirkt, die mit einem entsprechenden Wagen (18) zum Antreiben des Endlosförderbandes (20) gekoppelt ist, dadurch gekennzeichnet, daß die Reaktionseinrichtung (22) durch eine Rolle gebildet ist und daß das Förderband (20) über einen Teil des Umfangs der Rolle mit dieser in Kontakt steht.

## Revendications

1. Convoyeur comprenant un châssis et des moyens de transport sans fin supportés par ledit châssis, les dits moyens de transport sans fin comportant une pluralité de chariots reliés de façon pivotante (18) pourvus chacun d'une bande transporteuse sans fin (20) à utiliser pour supporter les objets à transporter pendant le fonctionnement, de sorte qu'une bande transporteuse sans fin (20) peut être entraînée dans une direction transversale à la direction longitudinale des moyens de transport, à l'aide d'un moteur linéaire (21) prenant une position fixe par rapport au châssis (19), ledit moteur (21) coopérant avec au moins un élément de réaction (22), qui est relié à un chariot correspondant (18) pour entraîner la bande transporteuse sans fin (20), caractérisé en ce que l'élément de réaction (22) est constitué par un rouleau et la bande transporteuse (20) est en contact avec ledit rouleau sur une partie de la circonférence dudit rouleau.
